# EUROPEAN PATENT SPECIFICATION

(11) **EP 4 129 001 B1**
(45) Date of publication and mention of the grant of the patent: **28.02.2024**
(21) Application number: 21712474.2
(22) Date of filing: 12.03.2021
(51) Int. Cl.: H04L 45/00

(54) **FILTERING OF INCOMING DATA**
FILTERN ANKOMMENDER DATEN
FILTRAGE DE DONNÉES D'ENTRÉE

(30) Priority: 23.03.2020 US 202062993251 P
(43) Date of publication of application: 08.02.2023
(73) Proprietor: Telefonaktiebolaget LM Ericsson (publ), 164 83 Stockholm (SE)
(72) Inventor: EVERTSSON, Rickard, 224 79 Lund (SE); MÅNSSON, Staffan, 232 53 Åkarp (SE); KÄLLSTRÖM, Johan, 582 44 Linköping (SE); FRANSSON, Per, 222 70 Lund (SE)
(74) Representative: Ericsson
(86) International application number: PCT/EP2021/056377
(87) International publication number: WO 2021/190959

(56) References cited:
- WO-A1-2019/035750
- CN-A- 110 049 512

## Description

### TECHNICAL FIELD

The present invention relates generally to the field of wireless communication. More particularly, it relates to filtering of incoming data to a processing platform from a radio unit.

### BACKGROUND

There exist some products deploying layer 1, L1, processing on COTS (commercial off the shelf) hardware (e.g. x86 servers). These L1 products typically receives IQ (In-phase Quadrature) Data from a radio unit. Typically, IQ Data are either in time or frequency domain.

Arrival of new technologies within the area of wireless communication both in a physical domain (e.g. development of hardware) and a non-physical domain (e.g. development of radio access technologies and cloud computation) provides an opportunity for handling much larger amounts of data than what previously has been possible.

However, few alternatives exist when it comes to actual handling, processing and sorting of such large amounts of data that may be envisioned. Hence there is a need for alternative approaches for e.g. handling, processing and sorting large amounts of data in wireless communication.

CN 110049512 A discloses a forward transmission network data processing device and method, The device comprises a processor, at least one high-speed forward transmission interface and at least one low-speed forward transmission interface. The processor comprises a protocol frame processing module used for converging data uploaded by a plurality of low-speed forward transmission interfaces into a group of data as first target data, selecting one of the high-speed forward interfaces as a first target interface, and sending the first target data to forward network transmission equipment through the first target interface, and selecting one of the high-speed forward interfaces as a second target interface, receiving the data issued by the forward network transmission equipment through the second target interface as second target data, and finally distributing the second target data to the corresponding low-speed forward interface.

### SUMMARY

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

It is an object of some embodiments to solve or mitigate, alleviate, or eliminate at least some of the above disadvantages and to provide methods an apparatuses for sorting incoming data frames to at least one of an at least one first processing unit and an at least one second processing unit of a processing platform.

The present invention is defined by the independent claims, to which reference should now be made. Specific embodiments are defined by the dependent claims.

According to a first aspect, this is achieved by a method of a processing platform operating in association with a wireless communication network for sorting one or more scheduled incoming data frames to one or more of at least one first processing unit and at least one second processing unit comprised in the processing platform. The processing platform comprises at least one network interface card, NIC. The method comprises transmitting at least one control message indicative of a preferred sorting method for the one or more scheduled incoming data frames to a radio unit operating in the wireless communication network and instructing the NIC to sort and forward at least one of the one or more scheduled incoming data frames according to the preferred sorting method to one or more of the at least one first processing unit and the at least one second processing unit.

In some embodiments, the preferred sorting method comprises determining by the NIC at least one of: type of message comprised in at least one of the received one or more scheduled incoming data frames; a band sector identification, carrier identification, radio unit port identification and port identification of at least one of the received one or more of scheduled incoming data frames. Instructing the NIC to sort and forward at least one of the one or more scheduled incoming data frames comprises: instructing the NIC to sort and forward the at least one of the one or more scheduled incoming data frames to one or more of the at least one first processing unit and the at least one second processing unit based on the determination.

In some embodiments, the preferred sorting method comprises determining by the NIC at least one of a frame, sub-frame, slot and symbol identification of at least one of the received one or more scheduled incoming data frames. Instructing the NIC to sort and forward at least one of the one or more scheduled incoming data frames comprises instructing the NIC to sort and forward the at least one of the one or more scheduled incoming data frames to one or more of the at least one first processing unit and the at least one second processing unit based on the determination.

In some embodiments, the at least one control message to the radio unit comprises an instruction to set a marker in one field of a header of at least one of the one or more scheduled incoming data frames. The marker indicates whether the at least one of the received one or more scheduled incoming data frames is to be sorted to one or more of the at least one first processing device and the at least one second processing device. Instructing the NIC to sort and forward at least one of the one or more scheduled incoming data frames comprises instructing the NIC to sort and forward the at least one of the one or more scheduled incoming data frames to one or more of the at least one first processing unit and the at least one second processing unit based on the marker.

In some embodiments, instructing the NIC to sort the at least one of the one or more scheduled incoming data frames comprises configuring the NIC to associate the at least one first processing unit and the at least one second processing unit with a respective destination address. The at least one control message to the radio unit comprises an instruction to insert an address indicator indicative of the respective destination address of the at least one first processing unit and the at least one second processing unit in a header of at least one of the one or more incoming data frames.

In some embodiments, the respective destination address is a destination Media Access Control, MAC, address.

In some embodiments, the respective destination address is an IP (Internet Protocol) address.

In some embodiments, the respective destination address is a physical address.

In some embodiments, the respective destination address is a virtual address.

In some embodiments the at least one first processing unit is of a same type as the at least one second processing unit.

In some embodiments, the at least one second processing unit comprises a larger amount of parallel processing cores than the at least one first processing unit.

In some embodiments, the at least one first processing unit is a Central Processing Unit, CPU, and the at least one second processing unit is a Graphics Processing Unit, GPU.

In some embodiments, the at least one first processing unit is of a different type than the at least one second processing unit.

In some embodiments, the method may further comprise instructing the NIC to sort and forward at least one of the one or more scheduled incoming data frames according to the preferred sorting method to both of the at least one first processing unit and the at least one second processing unit.

A second aspect is a method of a network interface card, NIC, of a processing platform operating in association with a wireless communication network for sorting one or more scheduled incoming data frames to one or more of at least one first processing unit and at least one second processing unit of the processing platform. The method comprises receiving an instruction to sort and forward one or more scheduled incoming data frames according to a preferred sorting method; receiving from a radio unit operating in the wireless communication the one or more scheduled incoming data frames to be sorted according to the preferred sorting method; and sorting and forwarding at least one of the received one or more scheduled incoming data frames to one or more of the at least one first and at least one second processing unit based on the preferred sorting method.

A third aspect is a computer program product comprising a non-transitory computer readable medium wherein the non-transitory computer readable medium has stored there on a computer program comprising program instructions. The computer program is configured to be loadable into a data-processing unit, comprising a processor and a memory associated with or integral to the data-processing unit. When loaded into the data-processing unit, the computer program is configured to be stored in the memory. The computer program, when loaded into and run by the processor, is configured to cause the processor to execute method steps according to any of the methods described in conjunction with the above aspects.

A fourth aspect is an apparatus of a processing platform operating in association with a wireless communication network for sorting one or more scheduled incoming data frames to one or more of at least one first processing unit and at least one second processing unit comprised in the processing platform. wherein the processing platform comprises at least one network interface card, NIC, and a controller configured to cause transmission of at least one control message indicative of a preferred sorting method for the one or more scheduled incoming data frames to a radio unit operating in the wireless communication network and instructing of the NIC to sort and forward at least one of the one or more scheduled incoming data frames according to the preferred sorting method to one or more of the at least one first processing unit and the at least one second processing unit.

A fifth aspect is an apparatus of a network interface card, NIC, of a processing platform operating in association with a wireless communication network for sorting one or more scheduled incoming data frames to one or more of at least one first processing unit and at least one second processing unit of the processing platform. The apparatus comprising a controller configured to cause reception of an instruction to sort and forward one or more scheduled incoming data frames according to a preferred sorting method; reception, from a radio unit operating in the wireless communication, of the one or more scheduled incoming data frames to be sorted according to the preferred sorting method; and sorting and forwarding of at least one of the received one or more scheduled incoming data frames to one or more of the at least one first and at least one second processing unit based on the preferred sorting method.

A sixth aspect is a processing platform comprising the apparatus according to the any of the fourth and fifth aspects.

In some embodiments, any of the above aspects may additionally have features identical with or corresponding to any of the various features as explained above for any of the other aspects.

An advantage of some embodiments is that incoming traffic can be scheduled to be processed by a certain processing unit.

Another advantage of some embodiments is that over all computational efficiency is increased since data which is demanding in terms processing computations may be directly forwarded to a suitable processor capable of processing such data.

Yet an advantage of some embodiments is that less traffic is transmitted over Ethernet connections, compared to prior art solutions.

### BRIEF DESCRIPTION OF THE DRAWINGS

Further objects, features and advantages will appear from the following detailed description of embodiments, with reference being made to the accompanying drawings, in which:
Fig. 1 is a schematic drawing illustrating an example system setup according to some embodiments;
Fig. 2 is a flowchart illustrating example method steps according to some embodiments;
Fig. 3 is a schematic drawing illustrating an example Ethernet frame according to some embodiments;
Fig. 4 is a signaling diagram illustrating example signaling steps according to some embodiments;
Fig. 5 is a flowchart illustrating example method steps according to some embodiments;
Fig. 6 is a schematic drawing illustrating an example computer program product according to some embodiments;
Fig. 7 is a block diagram illustrating an example apparatus according to some embodiments; and
Fig. 8 is a block diagram illustrating an example apparatus according to some embodiments.

### DETAILED DESCRIPTION

In the following, embodiments will be described where sorting incoming data frames to one or more different processing devices of a processing platform is enabled by means of header inspection.

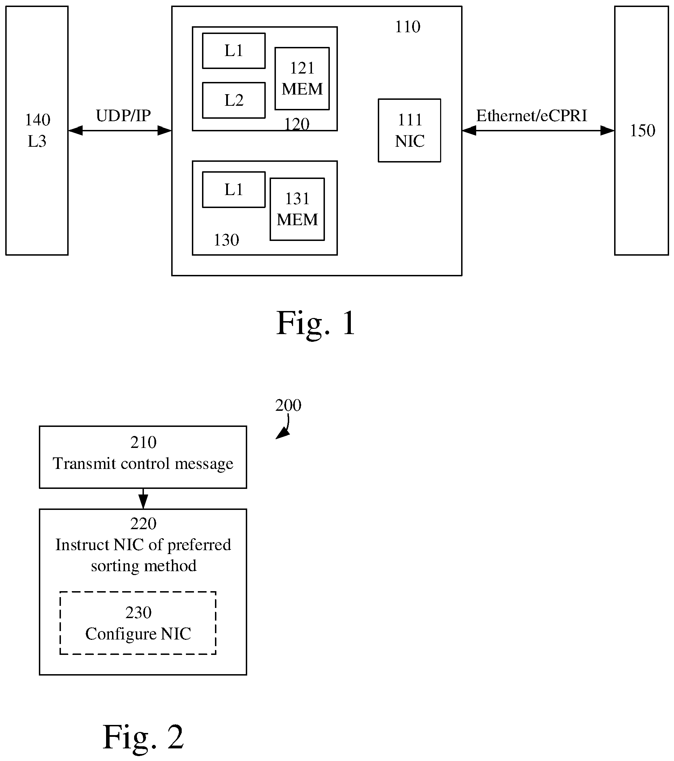

Fig. 1 is a schematic drawing of an example set up for sorting incoming data frames according to some embodiments. The set up may comprise a cloud implementation 140 performing e.g. Layer 3, L3, computations. The cloud may e.g. be host (e.g. a hosting server) on the Internet or any other type of wireless network, Radio Area Network, (RAN) Local Area Network (LAN), Wide Local Area Network (WLAN), virtual Local Area Network (VLAN) etc. The cloud may e.g. be associated with a core network.

The cloud may communicate with a processing platform 110 deployed in the wireless network by means of UDP/IP protocols (User Data Protocol/Internet Protocol). The processing platform 110 may e.g. be a distributed unit deployed e.g. on a server or similar hardware. The processing platform 110 may e.g. be deployed on a server. E.g. an x86 server hosting both L1 (layer 1) and possibly L2 (layer 2) and an ORAN (Open Radio Access Network) compatible radio unit 150. The processing platform may further communicate using Ethernet/eCPRI (enhanced common public radio interface) protocols with the radio unit also deployed in the wireless network (e.g. in the radio part of the network). The radio unit may e.g. be a network node (e.g. an eNB, gNB, base station, network terminal and/or communication device).

In this example it is assumed that the cloud 140, the processing unit 110 and the radio unit 150 are operating according to ORAN standards. However, the embodiments described herein are not limited to ORAN standards. Similarly, although an eCPRI protocol is often used as an example in this disclosure, it should be noted that the embodiments herein are applicable on other protocols as well.

The processing platform 110 may further comprise a first processing unit 120, a second processing unit 130 and a network interface card (NIC) 111. In Fig.1 the processing platform has been illustrated to comprise one first and second processing unit as well as one NIC, however, the processing platform may according to some embodiments comprise several first and second processing units as well as several NICs.

A processing unit may e.g. be GPU/FPGA (graphics processing unit/Field Programmable Gate array), a purpose-built ASIC (Application Specific Integrated Circuit) or other device connected to a memory bus/fabric/network.

In short, a processing unit may be any device that can be connected on a common memory bus/network.

In the example of Fig. 1, the first processing unit 120 operates with Layer 1, (L1) and Layer 2 (L2) processing and does further comprise (or is otherwise associated with or connectable to) a memory (MEM) 121. The memory 121 may be used for storing data that is to be processed by the first processing unit 120. The first processing unit 121 may e.g. be a core processing unit, CPU.

The second processing unit 130 may perform Layer 1 (L1) processing and may further comprise (or be otherwise connected to or associated with) a memory (MEM) 131 for storing data to be processed. The second processing unit 130 may in some embodiments be of a same type as the first processing unit 120. However, in some embodiments, the second processing unit 130 may be of another type than the first processing unit 120. E.g. in some embodiments, the second processing unit 130 may be a GPU. A GPU may have several more parallel processing cores than e.g. a CPU.

When having more than one processing unit deployed in the processing platform it may be advantageous to have efficient sorting algorithms and methods for sorting incoming data (e.g. incoming Ethernet packets) such that it is processed by either the first, the second or both processing units. Incoming Ethernet packets typically comprise IQ samples. It may be that some IQ samples are suitable to be processed on the host side (i.e. by a conventional CPU deployed in the processing platform) whereas it may be more beneficial to have some IQ samples processed by e.g. the GPU which typically may have a larger processing capacity than the CPU. In general, data may be sent to the place which is best suited to performing the processing in an efficient manner.

Similarly, the sorting algorithms described in this disclosure may be used for sorting data between different processing platforms (e.g. distributed units). Hence, it should be understood that, though most examples in this disclosure for simplicity relates to data being transmitted between one processing platform and one radio unit, all embodiments also apply on data being sorted and transmitted between several processing platforms and possibly several radio units. E.g. a control message transmitted from one processing platform may comprise information to a Radio Unit that data should be configured according to a preferred sorting method such that data is transmitted to one or more processing platforms (and their respective processing units).

According to some embodiments described herein, sorting may be made e.g. by redirecting Ethernet frames by performing deep inspection of the Ethernet frames associated with the incoming data and/or by sending control messages from the processing platform to the radio unit for providing the frames with suitable destination addresses.

When the term deep inspection is used in this disclosure it is to be seen as the processing platform (e.g. through the NIC) looks deeper into to the incoming frames in order to determine to which processing unit they should be directed to. Deep inspection may e.g. mean that the NIC checks beyond the first headers and inspect the payload of each Ethernet packet (or data frame).

It should be noted that the terms Ethernet frame and data frame may be used interchangeably in this disclosure. Similarly when the term incoming data or scheduled incoming data is referred to it may be taken as the incoming data being an Ethernet frame and/or data frame.

Incoming data is further taken to mean data which is incoming to the processing platform and/or the NIC.

Scheduled data is data which is scheduled by the processing platform (and or any device or entity providing the scheduling service to the processing platform and devices connected over the air) and is hence data which the processing platform is aware of will arrive at a later stage of time from the radio unit.

Since the processing platform is aware of which data is incoming it may also determine to what processing unit the incoming data should be forwarded to for processing.

Hence, the embodiments described herein enables initial parsing which can subdivide parts of the data to different specialised processing entities. Compared to prior art solutions, the payload can be split to different processing units and sent on a new internal network (e.g. PCIe, Peripheral Component Interconnect Express). Prior art solutions typically carry the payload and splits it later in the application code given the higher-level information. The embodiments described herein enable splitting these data paths/info quanta to minimize data transfers on the internal network/memory bus.

Hence data may be split for distributed processing. The data is preferably moved or copied to a memory close to or comprised in the unit that process the data. The unit can e.g. a CPU, GPU, FPGA (Field programmable Gate Array) and ASIC (Application Specific Integrated Circuit). In a computer each unit can address each other's memory, with a hit on latency and throughput. By processing the payload, data can be moved or copied closer to the unit in order to get higher performance. In prior art solution, data is typically moved to the RAM, Random Access Memory, (or L2 cache) which may affect performance.

Some of the embodiments described herein relates to NUMA (non-uniform memory access).

Data is placed in a NUMA aware sense depending on parts of the payload. Typically a NIC does not have any memory to store the data so it is preferable to send the data somewhere else. In prior art solutions, the data is typically sent first to the CPU RAM. However, CPU load and memory fabric traffic may be reduced by directly sending the data to another processing unit which leads to that the computer may be used more effectively.

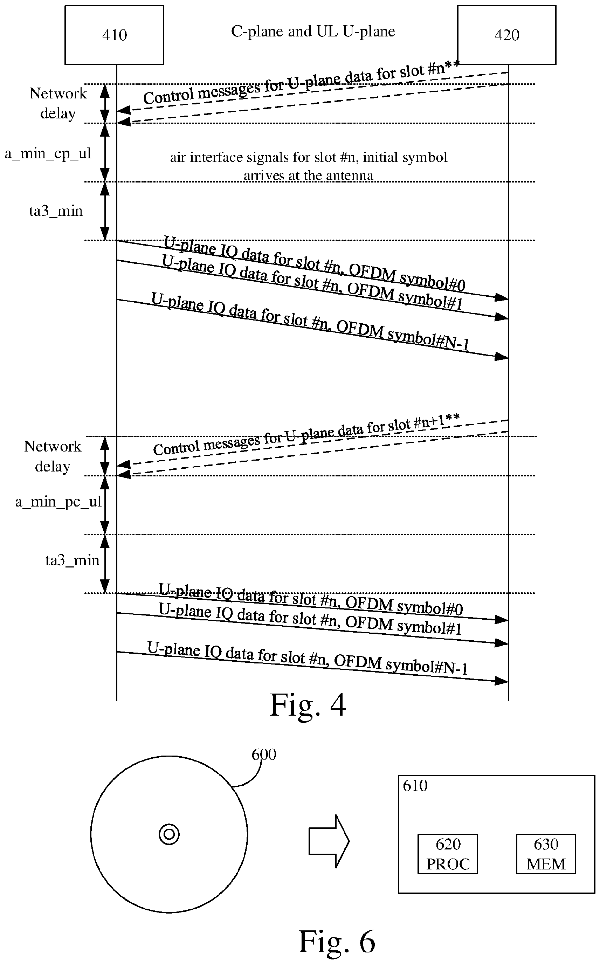

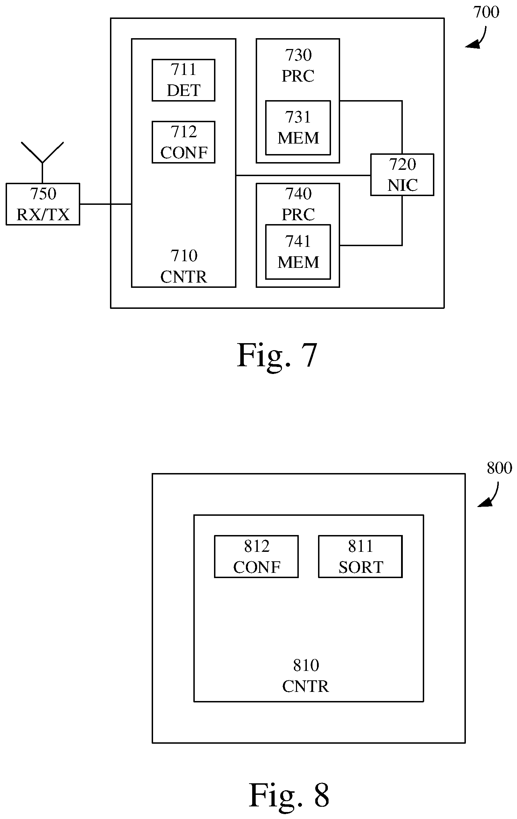

Fig.2 illustrates an example method 200 for sorting according to some embodiments. The method 200 may e.g. be carried out by the processing platform 110 as described in conjunction with Fig. 1 or with Fig. 4, Fig. 7 and possibly Fig. 8 below.

The method 200 may hence be of a processing platform operating in association with a wireless communication network for sorting one or more scheduled incoming data frames to one or more of at least one first processing unit and at least one second processing unit (e.g. the first processing unit 120 and the second processing unit 130 in Fig. 1) comprised in the processing platform. The processing platform comprises at least one network interface card, NIC, (e.g. the network interface card 140 of Fig.1).

The method comprises in step 110 transmitting at least one control message indicative of a preferred sorting method for the one or more scheduled incoming data frames to a radio unit (e.g. the radio unit 150 of Fig. 1) operating in the wireless communication network.

The preferred sorting method may furthermore be calculated somewhere in the wireless communication network or radio access network. It may e.g. be chosen based on the content of scheduled incoming data frames.

The control message(s) may e.g. comprise an instruction to configure the scheduled data frames such that deep inspection can be performed, and instructions relating to what data frame(s) goes to which processing unit of the processing platform based on the content of the frames. In such a scenario at least one control message may be transmitted.

Alternatively or additionally, the control messages(s) may comprise an instruction to associate the scheduled incoming data frames with a respective address of the processing units. E.g. data that should be handled by the first processing unit is associated with an address indicator indicative of an address of the first processing unit, and data that should be handled by the second processing unit is associated with an address indicator indicative of an address of the second processing unit. In such a scenario, at least two control messages may be transmitted, one for each processing unit's address.

The method 200 may then continue in step 120 with instructing the NIC to sort and forward at least one of the one or more scheduled incoming data frames according to the preferred sorting method to one or more of the at least one first processing unit and the at least one second processing unit.

In some embodiments, the NIC may be instructed to forward the data to a memory associated with and/or comprised in the respective processing units (e.g. the memory 121 and memory 131 of Fig. 1).

In some embodiments, the above method may result in that remote Direct Memory Access (rDMA) is used for writing incoming data directly to e.g. the (at least one) second processing unit (or to its memory) without using system memory. It may further be assumed that the second processing unit (e.g. a GPU) is on the same PCI (peripheral component interconnect) hierarchy which allows the NIC to access the memory of the second processing device. By filtering on the fields in the Ethernet header of the incoming data such as destination, source MAC (media access control) and/or VLAN (Virtual Local Area Network) ID(s) it is possible to configure the system (i.e. the processing platform and its comprised components) to save the incoming Ethernet frames into either the first or the second processing unit (or their respective memories). However, the embodiments described herein enables dynamical selection of in which memory (i.e. which processing unit) the scheduled incoming Ethernet frames should be stored in.

The dynamical selection may be based on various parameters. Such parameter may e.g. be the size of the incoming data, whether or not the incoming data requires much in terms of computing or processing, a priority of the incoming data, etc.

As noted above, one way to achieve dynamical selection is to perform deep inspection of the Ethernet frames (i.e. looking "deeper" into the frame by inspecting e.g. the eCPRI headers following the Ethernet headers, if eCPRI protocol is used).

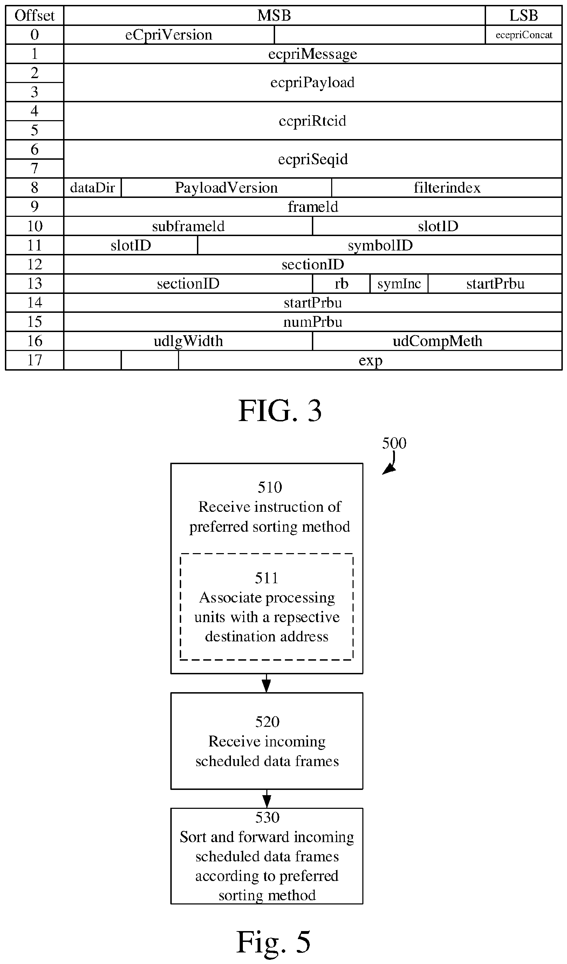

Fig. 3 illustrates a schematic drawing of eCPRI headers of an Ethernet frame. Offset 0-7 comprise the transport header. Offset 8-11 comprise frame header. Offset 12-17 comprise the section header.

By doing deep inspection and filtering on the fields of these headers, it can be chosen where to store the Ethernet frames. I.e. to which memory and processing unit the incoming Ethernet frame should be forwarded to.

Hence, in some embodiments, when the preferred sorting method is deep inspection, the preferred sorting method comprises determining by the NIC at least one of: type of message comprised in at least one of the received one or more scheduled incoming data frames (e.g. if the message is a Control or IQ data message); a band sector identification, carrier identification, radio unit port identification and port identification of at least one of the received one or more of scheduled incoming data frames. The method 200 may then in step 220 comprise instructing the NIC to sort and forward the at least one of the one or more scheduled incoming data frames to one or more of the at least one first processing unit and the at least one second processing unit based on the determination.

E.g. the processing platform may instruct the NIC that if the incoming Ethernet frame is an IQ data message it should be forwarded to the second processing unit etc. When doing deep inspection in the transport header (as described above) it may be chosen which processing unit should process the IQ samples from which radio unit, and hence a certain processing unit may be tied to a certain radio unit.

In some embodiments, doing deep inspection may be performed in the frame header. In such case, traffic can be sorted based on e.g. NIC determining at least one of a frame, subframe, slot and symbol identification of at least one of the received one or more scheduled incoming data frames. The step 220 of the method 200 comprising instructing the NIC to sort and forward at least one of the one or more scheduled incoming data frames may thus comprise instructing the NIC to sort and forward the at least one of the one or more scheduled incoming data frames to one or more of the at least one first processing unit and the at least one second processing unit based on the determination.

When deep inspection is to be performed in the frame header, PUSCH (physical uplink shared channel) can be scheduled in a certain slot, and the deep inspection may be configured such that all incoming eCPRI packets (or other packets depending on the protocol used) will be stored directly into the (e.g.) GPU memory. For another slot, the packets may be stored at another destination, such as the CPU or another GPU or accelerator.

In some embodiments, deep inspection may be performed in the section header. Then traffic may be sorted based on section IDs. It may e.g. be determined which sections that are of interest, and what is comprised in these sections. This may be specified in the control message to the radio unit which may configure the data frames accordingly. When the frames are then received at the processing platform, the NIC is enabled to sort them to their indicated destination based on deep inspection in the section header.

In some embodiments, if the IQ samples are in the frequency domain it may also be possible to sort based on the fields startPrbu and numPrbu (see Fig. 3). A user equipment (UE) (e.g. a wireless communication device such as a mobile phone, tablet, laptop, computer etc.) can be allocated in a range of PRBs (physical resource blocks) and over several OFDM (orthogonal frequency division-multiplex) symbols. Deep inspection enables redirection of this "allocation" to a specific destination.

Fig. 4 illustrates an uplink scenario between an ORAN radio unit 410 (e.g. the radio unit 150 described in conjunction with the previous figures) and an ORAN processing platform 420 (e.g. the processing platform 110 described in conjunction with the previous figures) having L1/L2 on a server. The processing platform 420 sends control messages with allocation details, frame, subframe, slot, symbols, and PRBs, and based on this the radio unit 410 later returns the correct IQ data.

An eCPRI packet can have several sections, starting with a section header, and these are specified in the control message sent by the processing platform 420 to the radio unit 410. However, by limiting the number of sections in an eCPRI message to one, or at least one section per Ethernet frame, it is easier to perform deep inspection of the Ethernet frames on the processing platform side. This is a result of the section header being in the beginning of the Ethernet frame.

Hence, in some embodiments, the radio unit implementation may limit the number of section in the Ethernet frames to one, which will make it easier for the processing platform to perform deep inspection of the incoming frames.

In some embodiments, multiple control messages may be sent from the processing platform 420 to the radio unit 410. A control message specifying four sections may get all four sections in one, or as many that are needed, Ethernet packet. Another control message for the same slot which specifies only one section may get this section in one Ethernet frame (provided that the section fits in the Ethernet frame).

Further (returning to the method 200, which may in some embodiments be applicable on the above fig 4.), in some embodiments, the at least one control message to the radio unit comprises an instruction to set a marker in one field of a header of at least one of the one or more scheduled incoming data frames. The marker indicates whether the at least one of the received one or more scheduled incoming data frames is to be sorted to one or more of the at least one first processing device and the at least one second processing device. Hence, when in method 200 the step 220 comprising instructing the NIC to sort and forward at least one of the one or more scheduled incoming data frames is carried out it may comprise instructing the NIC to sort and forward the at least one of the one or more scheduled incoming data frames to one or more of the at least one first processing unit and the at least one second processing unit based on the marker.

When the marker is set, deep inspection for the marker may e.g. be carried out in all headers. Or, it may be limited to a certain header, or to one or more headers according to the above embodiments associated with deep inspection.

The preferred sorting method does not have to comprise performing deep inspection. In some embodiments, the processing platform may have multiple destination endpoints. A destination endpoint may e.g. be a unique destination MAC, VLAN ID combination or double VLAN IDs if inner and outer VLANs are used. Hence, the first processing device may be associated with a unique destination address, and the second processing device may be associated with another unique destination address. It is envisioned that more than two endpoints may be determined for some embodiments. Then it may be dynamically selected which destination endpoint that the radio unit should send U-Plane (user plane) IQ data by using the control messages from the processing platform to the radio unit.

Hence, in some embodiments, the method step 220 (returning to Fig. 2) comprising instructing the NIC to sort the at least one of the one or more scheduled incoming data frames may comprise the optional step 230 of configuring the NIC to associate the at least one first processing unit and the at least one second processing unit with a respective destination address.

In such a scenario, the at least one control message to the radio unit comprises an instruction to (the radio unit to) insert an address indicator indicative of the respective destination address of the at least one first processing unit and the at least one second processing unit in a header of at least one of the one or more incoming data frames.

The configuration of the NIC may be dynamic and performed based on need. Hence, the addresses of the processing units may be changed over time. Addresses may e.g. be removed, added or change places depending e.g. on the scheduled data.

The address indicator could in some embodiments be direct or indirect. The address indicator may e.g. point to a physical or virtual address, or be a physical or virtual address.

When the NIC receives the incoming data frames, it may determine based on the address indicator whether an incoming frame should be forwarded to the first processing unit or the second processing unit (or store the data in the respective memory associated with the processing units based on the indicated address).

In some embodiments, the respective destination address is a destination Media Access Control, MAC, address.

In some embodiments, the respective destination address is an IP (Internet Protocol) address.

In some embodiments, the respective destination address is a VLAN ID.

In some embodiments, the at least one first processing unit is of a same type as the at least one second processing unit.

In some embodiments, the at least one second processing unit comprises a larger amount of parallel processing cores than the at least one first processing unit.

In some embodiments, the at least one first processing unit is a Central Processing Unit, CPU, and the at least one second processing unit is a Graphics Processing Unit, GPU.

In some embodiments, the at least one first processing unit is of a different type than the at least one second processing unit.

In some embodiments, the method 200 may further comprise instructing (or configuring, as it may form part of or be comprised in optional step 230) the NIC to sort and forward at least one of the one or more scheduled incoming data frames according to the preferred sorting method to both of the at least one first processing unit and the at least one second processing unit.

Hence, the same data may be forwarded twice, once (or at least once) to the first processing unit and once to the second processing unit. By instructing or configuring the NIC to forward the same data twice, data transmission between the radio unit and the processing platform may be decreased. If the NIC is not instructed to relay the incoming data to two destinations, the radio unit may duplicate the data on its own end and transmit the same data twice over a connection with limited bandwidth to the processing unit (or to at least one processing unit, it can e.g. send the data to a fail over and/or process part of the slots on a different unit, i.e. data may be split or duplicated between more than one processing units). This may have an unnecessary negative impact on the overall network performance.

In some embodiments, another destination endpoint may be created in which the data is duplicated and goes to more than one destination. Thus, the NIC can be instructed that some parts of the payload can be duplicated (common information shared by the two processing chains).

In some embodiments the processing platform may transmit two control messages to the radio unit, where the control messages overlaps the same symbol and PRB area, however this leads to the above duplication of data transmitted over the Ethernet.

Fig. 5 illustrates an example method 500 according to some embodiments. The method 500 is carried out by a network interface card (NIC). The method 500 may e.g. be carried out by the NIC of the processing platform described in conjunction with any of the previous figures 1-4. The method 500 may further in some embodiments be combined or otherwise form part of the method 200.

The method 500 may, as noted, be a method of a network interface card, NIC, of a processing platform operating in association with a wireless communication network for sorting one or more scheduled incoming data frames to one or more of at least one first processing unit and at least one second processing unit of the processing platform. The method comprises in step 510 receiving an instruction to sort and forward one or more scheduled incoming data frames according to a preferred sorting method. The instruction may e.g. be issued by the processing platform (compare with step 220 of the method 200) to the NIC.

Then in step 520, the method comprises receiving from a (e.g. one or more) radio unit operating in the wireless communication network the one or more scheduled incoming data frames to be sorted according to the preferred sorting method. Then in step 530, the method comprises sorting and forwarding at least one of the received one or more scheduled incoming data frames to one or more of the at least one first and at least one second processing unit based on the preferred sorting method.

In some embodiments, if the methods 200 and 500 were combined, the steps carried out by the NIC may be seen as steps carried out by a module or component comprised in the processing platform (compare e.g. with the set up illustrated in Fig. 1). The steps according to the method 500 may thus be carried out by the processing unit.

In some embodiments, the instruction to sort according to a preferred sorting method may comprise an instruction to sort based on performing deep inspection of the incoming Ethernet frames (as described above in conjunction with the previous figures 2-4).

Hence, in some embodiments, the step 530 comprising sorting at least one of the received one or more scheduled incoming data frames may comprise determining at least one of: type of message comprised in at least one of the received one or more scheduled incoming data frames; a band sector identification, carrier identification, radio unit port identification and port identification. The step 530 may further comprise sorting and forwarding at least one of the received one or more scheduled incoming data frames to one or more of the at least one first processing unit and the at least one second processing unit based on the determination (e.g. the NIC may have been instructed to forward all data frames having a certain carrier identification to the first processing unit etc.).

In some embodiments, the step 530 comprising sorting at least one of the received one or more scheduled incoming data frames may comprise determining at least one of a frame, subframe, slot and symbol identification of at least one of the received one or more scheduled incoming data frames. The step 530 may further comprise sorting and forwarding the at least one received one or more scheduled incoming data frames to one or more of the at least one first processing unit and the at least one second processing unit based on the determination.

In some embodiments, the step 530 may comprise sorting at least one of the received one or more scheduled incoming data frames by detecting a marker in one field of a header of at least one of the received one or more scheduled incoming data frames. The marker indicates whether the at least one of the received plurality of scheduled incoming data frames is to be sorted to one or more of the at least one first processing device and the at least one second processing device, and the step 530 may further comprise sorting and forwarding the at least one of the received plurality of scheduled incoming data frames according to the detected marker.

In some embodiments, the step 510 may comprise receiving an instruction to sort one or more scheduled incoming data frames by receiving a configuration for associating the at least one first processing unit and the at least one second processing unit with a respective destination address. The configuration may e.g. be carried out by the processing platform (compare with optional step 230 of the method 200), such that the processing device configures the NIC with suitable software for assigning addresses.

The step 530 may thus in some embodiments comprise sorting at least one of the received one or more scheduled incoming data frames by determining whether at least one of the received one or more scheduled incoming data frames comprises a header comprising an address indication indicative of the respective destination address and further sorting and forwarding the at least one of the received one or more of scheduled incoming data frames to one or more of the at least one first processing unit and the at least one second processing unit based on the determination of the address indication.

In some embodiments, the respective destination address is a destination Media Access Control, MAC, address.

Hence, the address indicator may indicate to the NIC to which processing unit the data should be forwarded to.

In some embodiments, the step 510 may comprise receiving an instruction to sort and forward at least one of the scheduled incoming data frames to be sorted according to the preferred sorting method to both of the at least one first processing unit and the at least one second processing unit and the step 530 may comprise sorting and forwarding the at least one data frame to both of the at least one first processing unit and the at least one second processing unit according to the preferred sorting method based on the content of the at least one incoming data frame.

Fig. 6 illustrates a computer program product 600 comprising a non-transitory computer readable medium according to some embodiments. The non-transitory computer readable medium has stored there on a computer program comprising program instructions. The computer program is configured to be loadable into a data-processing unit 610, comprising a processor (PROC) 620 and a memory (MEM) 630 associated with or integral to the data-processing unit 610. When loaded into the data-processing unit 610, the computer program is configured to be stored in the memory 630. The computer program, when loaded into and run by the processor 620 is configured to cause the execution of method steps according to any of the methods described in conjunction with Figures 2 and 5 and/or the signalling steps according to the signalling described in conjunction with Figure 4.

Fig. 7 is a schematic drawing of an apparatus 700 of a processing platform operating in association with a wireless communication network for sorting one or more scheduled incoming data frames to one or more of at least one first processing unit (PRC) 730 and at least one second processing unit (PRC) 741 comprised in the processing platform.

The apparatus 700 may e.g. be the processing platform as described in conjunction with any of the Figs. 1 and 4 and may be configured to carry out any of the methods 200 or 500 and/or the signalling steps according to the signalling described in conjunction with Figure 4, either separate or combined.

The processing platform comprises at least one network interface card (NIC) 720 and a controller (CNTR) 710 configured to cause transmission of at least one control message indicative of a preferred sorting method for the one or more scheduled incoming data frames to a radio unit operating in the wireless communication network.

The apparatus may e.g. comprise a transceiver (RX/TX) 750 comprising at least one antenna element, and the controller may be configured to cause the transceiver to transmit.

The controller 710 may be further configured to cause instruction of the NIC 720 to sort and forward at least one of the one or more scheduled incoming data frames according to the preferred sorting method to one or more of the at least one first processing unit and the at least one second processing unit.

The at least one first processing unit 730 and the at least one section processing unit 740 may comprise a respective memory (MEM) 731, 741, and the controller 710 may cause instruction of the NIC to forward the incoming data to be stored in the respective memory of the processing devices. E.g. based on the preferred sorting method and the content of the incoming data.

In some embodiments, the controller 710 may further comprise a determiner (e.g. a determining module) (DET) 711 which may be configured to determine a preferred sorting method for the scheduled incoming data.

In some embodiments, the preferred sorting method comprises determining by the NIC 720 at least one of: type of message comprised in at least one of the received one or more scheduled incoming data frames; a band sector identification, carrier identification, radio unit port identification and port identification of at least one of the received one or more of scheduled incoming data frames. Causing instruction of the NIC to sort and forward at least one of the one or more scheduled incoming data frames may thus comprise the controller 710 causing instruction of the NIC 720 to sort and forward the at least one of the one or more scheduled incoming data frames to one or more of the at least one first processing unit and the at least one second processing unit based on the determination.

In some embodiments, the preferred sorting method comprises determining by the NIC 720 at least one of a frame, sub frame, slot and symbol identification of at least one of the received one or more scheduled incoming data frames. Causing instructing the NIC 720 to sort and forward at least one of the one or more scheduled incoming data frames may thus comprise the controller 710 being configured to cause instruction of the NIC 720 to sort and forward the at least one of the one or more scheduled incoming data frames to one or more of the at least one first processing unit 730 and the at least one second processing unit 740 based on the determination.

In some embodiments, the at least one control message to the radio unit comprises an instruction to set a marker in one field of a header of at least one of the one or more scheduled incoming data frames. The marker indicates whether the at least one of the received one or more scheduled incoming data frames is to be sorted to one or more of the at least one first processing device 720 and the at least one second processing device 740. The controller 710 may be configured to cause instructing of the NIC to sort and forward at least one of the one or more scheduled incoming data frames by being configured to cause instructing of the NIC to sort and forward the at least one of the one or more scheduled incoming data frames to one or more of the at least one first processing unit 730 and the at least one second processing unit 740 based on the marker.

In some embodiments, the controller 710 may further comprise a configurer (or a configuring module) (CONF) 712 configured to provide configurations to the NIC 720.

In some embodiments, the controller 710 may thus be configured to cause instruction of the NIC 720 to sort the at least one of the one or more scheduled incoming data frames by e.g. causing the configurer 712 to cause configuring of the NIC 720 to associate the at least one first processing unit 730 and the at least one second processing unit 740 with a respective destination address.

The at least one control message to the radio unit comprises an instruction to insert an address indicator indicative of the respective destination address of the at least one first processing unit 730 and the at least one second processing unit 740 in a header of at least one of the one or more incoming data frames.

In some embodiments, the respective destination address is a destination Media Access Control, MAC, address.

In some embodiments, the at least one first processing unit 730 is of a same type as the at least one second processing unit 740.

In some embodiments, the at least one first processing unit 730 is of a different type than the at least one second processing unit 740.

In some embodiments, the at least one second processing unit 730 comprises a larger amount of parallel processing cores than the at least one first processing unit 740.

In some embodiments, the at least one first processing unit 730 is a Central Processing Unit, CPU, and the at least one second processing unit 740 is a Graphics Processing Unit, GPU.

In some embodiments, the controller 710 is further configured to cause instructing of the NIC 720 to sort and forward at least one of the one or more scheduled incoming data frames according to the preferred sorting method to both of the at least one first processing unit 730 and the at least one second processing unit 740.

Fig. 8 is a schematic drawing of an apparatus 800 of a network interface card, NIC. The NIC may e.g. be comprised in a processing platform operating in association with a wireless communication network for sorting one or more scheduled incoming data frames to one or more of at least one first processing unit and at least one second processing unit of the processing platform.

The apparatus 800 may hence in some embodiments be the NIC 720 described in conjunction with Fig 7, and comprised in the processing platform described in one or more of Figs. 1, 4 or 7. It may further be configured to carry out the above described method 500, or the method 500 combined with the method 200.

The apparatus 800 comprises a controller (CNTR) 810 configured to cause reception of an instruction to sort and forward one or more scheduled incoming data frames according to a preferred sorting method. The apparatus 800 may comprise one or more components (not shown) for receiving data and forwarding data (e.g. sorted data) to and from the NIC.

The controller 810 may also be configured to cause reception, from a radio unit operating in the wireless communication, of the one or more scheduled incoming data frames to be sorted according to the preferred sorting method. The incoming data may e.g. be received by the processing platform, and then relayed to the NIC. In some embodiments, the NIC may comprise an antenna circuit comprising at least one antenna element for directly receiving the incoming data frames from the radio unit.

The controller 810 may also be configured to cause sorting and forwarding of at least one of the received one or more scheduled incoming data frames to one or more of the at least one first and at least one second processing unit based on the preferred sorting method.

The controller may e.g. comprise a sorter (or a sorting module) (SORT) 811 configured to carry out the sorting according to the preferred sorting method (e.g. perform deep inspection or determine a destination of the incoming frames, according to any of the above described embodiments for the previous figures 1-7).

Hence, the controller may be configured to cause (e.g. by causing the sorter 811 to sort) sorting at least one of the received one or more scheduled incoming data frames by causing determination of at least one of: type of message comprised in at least one of the received one or more scheduled incoming data frames; a band sector identification, carrier identification, radio unit port identification and port identification. The controller 810 may also be configured to cause sorting and forwarding of at least one of the received one or more scheduled incoming data frames to one or more of the at least one first processing unit and the at least one second processing unit based on the determination.

In some embodiments, the controller may be configured to cause (e.g. by causing the sorter 811) sorting of at least one of the received one or more scheduled incoming data frames by causing determination of at least one of a frame, sub frame, slot and symbol identification of at least one of the received one or more scheduled incoming data frames. The controller 810 may be configured to cause sorting and forwarding of the at least one received one or more scheduled incoming data frames to one or more of the at least one first processing unit and the at least one second processing unit based on the determination.

In some embodiments, the controller 810 may be configured to cause sorting of at least one of the received one or more scheduled incoming data frames by causing detection of a marker in one field of a header of at least one of the received one or more scheduled incoming data frames. The marker indicates whether the at least one of the received plurality of scheduled incoming data frames is to be sorted to one or more of the at least one first processing device and the at least one second processing device, and the controller may be configured to cause (e.g. by causing the sorter sorting and forwarding of the at least one of the received plurality of scheduled incoming data frames to either the first or second processing device according to the detected marker).

In some embodiments, the controller 810 is configured to cause reception of an instruction to sort one or more scheduled incoming data frames by causing reception of a configuration for associating the at least one first processing unit and the at least one second processing unit with a respective destination address. The configuration may e.g. be provided by the processing platform to the NIC. The controller 810 may thus receive the configuration as software and apply it to the components of the NIC.

The controller 810 may be configured to cause sorting of at least one of the received one or more scheduled incoming data frames by causing determination of whether at least one of the received one or more scheduled incoming data frames comprises an address indication indicative of the respective destination address and be configured to cause sorting and forwarding of the at least one of the received one or more of scheduled incoming data frames to one or more of the at least one first processing unit and the at least one second processing unit based on the determination (e.g. if the destination address is indicated to belong to the first processing device, the frame will be forwarded for storing in a memory associated with the first processing device).

In some embodiments, the respective destination address is a destination Media Access Control, MAC, address.

In some embodiments, the controller 810 is further configured to cause reception of an instruction to sort at least one of the scheduled incoming data frames according to the preferred sorting method and forward the scheduled incoming data frames to both of the at least one first processing unit and the at least one second processing unit.

The controller 810 may be configured to cause sorting and forwarding of the at least one data frame to both of the at least one first processing unit and the at least one second processing unit according to the preferred sorting method based on the content of the at least one incoming data frame.

In some embodiments, a processing platform may comprise the apparatuses as described in conjunction with either of Figs. 7-8.

The described embodiments and their equivalents may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of this disclosure.

Embodiments may appear within an electronic apparatus (such as a wireless communication device) comprising circuitry/logic or performing methods according to any of the embodiments. The electronic apparatus may, for example, be a portable or handheld mobile radio communication equipment, a mobile radio terminal, a mobile telephone, a base station, a base station controller, a pager, a communicator, an electronic organizer, a smartphone, a computer, a notebook, a USB-stick, a plug-in card, an embedded drive, or a mobile gaming device.

According to some embodiments, a computer program product comprises a computer readable medium such as, for example, a diskette or a CD-ROM. The computer program may be loadable into a data-processing unit, which may, for example, be comprised in a mobile terminal or network node or processing platform. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the methods shown in any of the Figures 2 and 5 and/or the signalling steps according to the signalling described in conjunction with Figure 4.

Reference has been made herein to various embodiments. However, a person skilled in the art would recognize numerous variations to the described embodiments that would still fall within the scope of the claims. For example, the method embodiments described herein describes example methods through method steps being performed in a certain order. However, it is recognized that these sequences of events may take place in another order without departing from the scope of the claims. Furthermore, some method steps may be performed in parallel even though they have been described as being performed in sequence.

In the same manner, it should be noted that in the description of embodiments, the partition of functional blocks into particular units is by no means limiting. Contrarily, these partitions are merely examples. Functional blocks described herein as one unit may be split into two or more units. In the same manner, functional blocks that are described herein as being implemented as two or more units may be implemented as a single unit without departing from the scope of the below claims.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely for illustrative purpose and by no means limiting. Instead, all variations that fall within the range of the below claims are intended to be embraced therein.

## Claims

1. A method of a processing platform operating in association with a wireless communication network for sorting one or more scheduled incoming data frames to one or more of at least one first processing unit and at least one second processing unit comprised in the processing platform, wherein the processing platform comprises at least one network interface card, NIC, the method being **characterised by** comprising:
transmitting at least one control message indicative of a preferred sorting method for the one or more scheduled incoming data frames to a radio unit operating in the wireless communication network; and
instructing the NIC to sort and forward at least one of the one or more scheduled incoming data frames according to the preferred sorting method to one or more of the at least one first processing unit and the at least one second processing unit.

2. The method according to claim 1, wherein the preferred sorting method comprises determining by the NIC at least one of: type of message comprised in at least one of the received one or more scheduled incoming data frames; a band sector identification, carrier identification, radio unit port identification and port identification of at least one of the received one or more of scheduled incoming data frames; and wherein instructing the NIC to sort and forward at least one of the one or more scheduled incoming data frames comprises:
instructing the NIC to sort and forward the at least one of the one or more scheduled incoming data frames to one or more of the at least one first processing unit and the at least one second processing unit based on the determination.

3. The method according to claim 2, wherein the at least one control message to the radio unit comprises an instruction to set a marker in one field of a header of at least one of the one or more scheduled incoming data frames, wherein the marker indicates whether the at least one of the received one or more scheduled incoming data frames is to be sorted to one or more of the at least one first processing device and the at least one second processing device, and wherein instructing the NIC to sort and forward at least one of the one or more scheduled incoming data frames comprises
instructing the NIC to sort and forward the at least one of the one or more scheduled incoming data frames to one or more of the at least one first processing unit and the at least one second processing unit based on the marker.

4. A method of a network interface card, NIC, of a processing platform operating in association with a wireless communication network for sorting one or more scheduled incoming data frames to one or more of at least one first processing unit and at least one second processing unit of the processing platform, the method being **characterised by** comprising:
receiving an instruction to sort and forward one or more scheduled incoming data frames according to a preferred sorting method;
receiving from a radio unit operating in the wireless communication the one or more scheduled incoming data frames to be sorted according to the preferred sorting method; and
sorting and forwarding at least one of the received one or more scheduled incoming data frames to one or more of the at least one first and at least one second processing unit based on the preferred sorting method.

5. The method according to claim 4, wherein sorting at least one of the received one or more scheduled incoming data frames comprises determining at least one of: type of message comprised in at least one of the received one or more scheduled incoming data frames; a band sector identification, carrier identification, radio unit port identification and port identification; and sorting and forwarding at least one of the received one or more scheduled incoming data frames to one or more of the at least one first processing unit and the at least one second processing unit based on the determination.

6. The method according to claim 5, wherein sorting at least one of the received one or more scheduled incoming data frames comprises
detecting a marker in one field of a header of at least one of the received one or more scheduled incoming data frames, wherein the marker indicates whether the at least one of the received plurality of scheduled incoming data frames is to be sorted to one or more of the at least one first processing device and the at least one second processing device, and sorting and forwarding the at least one of the received plurality of scheduled incoming data frames according to the detected marker.

7. A computer program product comprising a non-transitory computer readable medium wherein the non-transitory computer readable medium has stored there on a computer program comprising program instructions, wherein the computer program is configured to be loadable into a data-processing unit, comprising a processor and a memory associated with or integral to the data-processing unit, wherein when loaded into the data-processing unit, the computer program is configured to be stored in the memory, wherein the computer program, when loaded into and run by the processor is configured to cause the processor to execute method steps according to any of the methods described in conjunction with the claims 1-6.

8. An apparatus of a processing platform operating in association with a wireless communication network for sorting one or more scheduled incoming data frames to one or more of at least one first processing unit and at least one second processing unit comprised in the processing platform, wherein the processing platform comprises at least one network interface card, NIC, and a controller **characterised by** being configured to cause:
transmission of at least one control message indicative of a preferred sorting method for the one or more scheduled incoming data frames to a radio unit operating in the wireless communication network; and
instructing of the NIC to sort and forward at least one of the one or more scheduled incoming data frames according to the preferred sorting method to one or more of the at least one first processing unit and the at least one second processing unit.

9. The apparatus according to claim 8, wherein the preferred sorting method comprises determining by the NIC at least one of: type of message comprised in at least one of the received one or more scheduled incoming data frames; a band sector identification, carrier identification, radio unit port identification and port identification of at least one of the received one or more of scheduled incoming data frames; and wherein causing instructing of the NIC to sort and forward at least one of the one or more scheduled incoming data frames comprises causing:
instructing of the NIC to sort and forward the at least one of the one or more scheduled incoming data frames to one or more of the at least one first processing unit and the at least one second processing unit based on the determination.

10. The apparatus according to claim 9, wherein the at least one control message to the radio unit comprises an instruction to set a marker in one field of a header of at least one of the one or more scheduled incoming data frames, wherein the marker indicates whether the at least one of the received one or more scheduled incoming data frames is to be sorted to one or more of the at least one first processing device and the at least one second processing device, and wherein instructing of the NIC to sort and forward at least one of the one or more scheduled incoming data frames comprises causing
instructing of the NIC to sort and forward the at least one of the one or more scheduled incoming data frames to one or more of the at least one first processing unit and the at least one second processing unit based on the marker.

11. The apparatus according to any of the previous claims 9-10, wherein instructing of the NIC to sort the at least one of the one or more scheduled incoming data frames comprises causing:
configuring of the NIC to associate the at least one first processing unit and the at least one second processing unit with a respective destination address;
wherein the at least one control message to the radio unit comprises an instruction to insert an address indicator indicative of the respective destination address of the at least one first processing unit and the at least one second processing unit in a header of at least one of the one or more incoming data frames.

12. An apparatus of a network interface card, NIC, of a processing platform operating in association with a wireless communication network for sorting one or more scheduled incoming data frames to one or more of at least one first processing unit and at least one second processing unit of the processing platform, the apparatus comprising a controller **characterised by** being configured to cause:
reception of an instruction to sort and forward one or more scheduled incoming data frames according to a preferred sorting method;
reception, from a radio unit operating in the wireless communication, of the one or more scheduled incoming data frames to be sorted according to the preferred sorting method; and
sorting and forwarding of at least one of the received one or more scheduled incoming data frames to one or more of the at least one first and at least one second processing unit based on the preferred sorting method.

13. The apparatus according to claim 12, wherein sorting at least one of the received one or more scheduled incoming data frames comprises causing determination of at least one of: type of message comprised in at least one of the received one or more scheduled incoming data frames; a band sector identification, carrier identification, radio unit port identification and port identification; and causing sorting and forwarding of at least one of the received one or more scheduled incoming data frames to one or more of the at least one first processing unit and the at least one second processing unit based on the determination.

14. A processing platform comprising the apparatus according to the claims 8-13.

## Patentansprüche

1. Verfahren einer Verarbeitungsplattform, die in Verbindung mit einem drahtlosen Kommunikationsnetzwerk arbeitet, zum Sortieren eines oder mehrerer geplanter ankommender Datenrahmen an eine oder mehrere mindestens einer ersten Verarbeitungseinheit und mindestens einer zweiten Verarbeitungseinheit, die in der Verarbeitungsplattform enthalten sind, wobei die Verarbeitungsplattform mindestens eine Netzwerkschnittstellenkarte, NIC, umfasst, wobei das Verfahren **dadurch gekennzeichnet ist, dass** es Folgendes umfasst:
Übertragen mindestens einer Steuernachricht, die auf ein bevorzugtes Sortierverfahren für den einen oder die mehreren geplanten ankommenden Datenrahmen hinweist, an eine Funkeinheit, die in dem drahtlosen Kommunikationsnetzwerk arbeitet; und
Anweisen der NIC zum Sortieren und Weiterleiten mindestens eines des einen oder der mehreren geplanten ankommenden Datenrahmen gemäß dem bevorzugten Sortierverfahren an eine oder mehrere der mindestens einen ersten Verarbeitungseinheit und der mindestens einen zweiten Verarbeitungseinheit.

2. Verfahren nach Anspruch 1, wobei das bevorzugte Sortierverfahren Bestimmen durch die NIC von mindestens einem umfasst von: Nachrichtentyp, der in mindestens einem des empfangenen einen oder der empfangenen mehreren geplanten ankommenden Datenrahmen enthalten ist; einer Bandbereich-Identifizierung, Träger-Identifizierung, Funkeinheit-Anschluss-Identifizierung und Anschluss-Identifizierung mindestens eines des empfangenen einen oder der empfangenen mehreren von geplanten ankommenden Datenrahmen; und wobei das Anweisen der NIC zum Sortieren und Weiterleiten mindestens eines des einen oder der mehreren geplanten ankommenden Datenrahmen Folgendes umfasst:
Anweisen der NIC zum Sortieren und Weiterleiten des mindestens einen des einen oder der mehreren geplanten ankommenden Datenrahmen an eine oder mehrere der mindestens einen ersten Verarbeitungseinheit und der mindestens einen zweiten Verarbeitungseinheit basierend auf der Bestimmung.

3. Verfahren nach Anspruch 2, wobei die mindestens eine Steuernachricht an die Funkeinheit eine Anweisung zum Einstellen einer Markierung in einem Feld eines Headers mindestens eines des einen oder der mehreren geplanten ankommenden Datenrahmen umfasst, wobei die Markierung angibt, ob der mindestens eine des empfangenen einen oder der empfangenen mehreren geplanten ankommenden Datenrahmen an eine oder mehrere der mindestens einen ersten Verarbeitungsvorrichtung und der mindestens einen zweiten Verarbeitungsvorrichtung zu sortieren ist, und wobei das Anweisen der NIC zum Sortieren und Weiterleiten mindestens eines des einen oder der mehreren geplanten ankommenden Datenrahmen Anweisen der NIC zum Sortieren und Weiterleiten des mindestens einen des einen oder der mehreren geplanten ankommenden Datenrahmen an eine oder mehrere der mindestens einen ersten Verarbeitungseinheit und der mindestens einen zweiten Verarbeitungseinheit basierend auf der Markierung umfasst.

4. Verfahren einer Netzwerkschnittstellenkarte, NIC, einer Verarbeitungsplattform, die in Verbindung mit einem drahtlosen Kommunikationsnetzwerk arbeitet, zum Sortieren eines oder mehrerer geplanter ankommender Datenrahmen an eine oder mehrere mindestens einer ersten Verarbeitungseinheit und mindestens einer zweiten Verarbeitungseinheit der Verarbeitungsplattform, wobei das Verfahren **dadurch gekennzeichnet ist, dass** es Folgendes umfasst:
Empfangen einer Anweisung zum Sortieren und Weiterleiten eines oder mehrerer geplanter ankommender Datenrahmen gemäß einem bevorzugten Sortierverfahren;
Empfangen von einer Funkeinheit, die in der drahtlosen Kommunikation arbeitet, des einen oder der mehreren geplanten ankommenden Datenrahmen, die gemäß dem bevorzugten Sortierverfahren zu sortieren sind; und
Sortieren und Weiterleiten mindestens eines des empfangenen einen oder der empfangenen mehreren geplanten ankommenden Datenrahmen an eine oder mehrere der mindestens einen ersten und mindestens einen zweiten Verarbeitungseinheit basierend auf dem bevorzugten Sortierverfahren.

5. Verfahren nach Anspruch 4, wobei das Sortieren mindestens eines des empfangenen einen oder der empfangenen mehreren geplanten ankommenden Datenrahmen Bestimmen von mindestens einem umfasst von: Nachrichtentyp, der in mindestens einem des empfangenen einen oder der empfangenen mehreren geplanten ankommenden Datenrahmen enthalten ist; einer Bandbereich-Identifizierung, Träger-Identifizierung, Funkeinheit-Anschluss-Identifizierung und Anschluss-Identifizierung; und Sortieren und Weiterleiten mindestens eines des empfangenen einen oder der empfangenen mehreren geplanten eingehenden Datenrahmen an eine oder mehrere der mindestens einen ersten Verarbeitungseinheit und der mindestens einen zweiten Verarbeitungseinheit basierend auf der Bestimmung.

6. Verfahren nach Anspruch 5, wobei das Sortieren mindestens eines des empfangenen einen oder der empfangenen mehreren geplanten ankommenden Datenrahmen Erfassen einer Markierung in einem Feld eines Headers mindestens eines des empfangenen einen oder der empfangenen mehreren geplanten ankommenden Datenrahmen, wobei die Markierung angibt, ob der mindestens eine der empfangenen Vielzahl geplanter ankommender Datenrahmen an eine oder mehrere der mindestens einen ersten Verarbeitungsvorrichtung und der mindestens einen zweiten Verarbeitungsvorrichtung zu sortieren ist, und Sortieren und Weiterleiten des mindestens einen der empfangenen Vielzahl geplanter ankommender Datenrahmen gemäß der erfassten Markierung umfasst.

7. Computerprogrammprodukt, umfassend ein nichtflüchtiges, computerlesbares Medium, wobei auf dem nichtflüchtigen, computerlesbaren Medium ein Computerprogramm gespeichert ist, das Computeranweisungen umfasst, wobei das Computerprogramm dazu konfiguriert ist, in eine Datenverarbeitungseinheit ladbar zu sein, umfassend einen Prozessor und einen Speicher, welcher der Datenverarbeitungseinheit zugeordnet oder in diese integriert ist, wobei das Computerprogramm, wenn es in die Datenverarbeitungseinheit geladen ist, dazu konfiguriert ist, in dem Speicher gespeichert zu werden, wobei das Computerprogramm, wenn es in den Prozessor geladen und durch diesen ausgeführt wird, dazu konfiguriert ist, den Prozessor zu veranlassen, Verfahrensschritte gemäß einem der Verfahren auszuführen, die in Verbindung mit den Ansprüchen 1-6 beschrieben sind.

8. Vorrichtung einer Verarbeitungsplattform, die in Verbindung mit einem drahtlosen Kommunikationsnetzwerk arbeitet, zum Sortieren eines oder mehrerer geplanter ankommender Datenrahmen an eine oder mehrere mindestens einer ersten Verarbeitungseinheit und mindestens einer zweiten Verarbeitungseinheit, die in der Verarbeitungsplattform enthalten sind, wobei die Verarbeitungsplattform mindestens eine Netzwerkschnittstellenkarte, NIC, und eine Steuerung umfasst, die **dadurch gekennzeichnet ist, dass** sie dazu konfiguriert ist, Folgendes zu veranlassen:
Übertragung mindestens einer Steuernachricht, die auf ein bevorzugtes Sortierverfahren für den einen oder die mehreren geplanten ankommenden Datenrahmen hinweist, an eine Funkeinheit, die in dem drahtlosen Kommunikationsnetzwerk arbeitet; und
Anweisen der NIC zum Sortieren und Weiterleiten mindestens eines des einen oder der mehreren geplanten ankommenden Datenrahmen gemäß dem bevorzugten Sortierverfahren an eine oder mehrere der mindestens einen ersten Verarbeitungseinheit und der mindestens einen zweiten Verarbeitungseinheit.

9. Vorrichtung nach Anspruch 8, wobei das bevorzugte Sortierverfahren Bestimmen durch die NIC von mindestens einem umfasst von: Nachrichtentyp, der in mindestens einem des empfangenen einen oder der empfangenen mehreren geplanten ankommenden Datenrahmen enthalten ist; einer Bandbereich-Identifizierung, Träger-Identifizierung, Funkeinheit-Anschluss-Identifizierung und Anschluss-Identifizierung mindestens eines des empfangenen einen oder der empfangenen mehreren von geplanten ankommenden Datenrahmen; und wobei das Veranlassen des Anweisens der NIC zum Sortieren und Weiterleiten mindestens eines des einen oder der mehreren geplanten ankommenden Datenrahmen Veranlassen von Folgendem umfasst:
Anweisen der NIC zum Sortieren und Weiterleiten des mindestens einen des einen oder der mehreren geplanten ankommenden Datenrahmen an eine oder mehrere der mindestens einen ersten Verarbeitungseinheit und der mindestens einen zweiten Verarbeitungseinheit basierend auf der Bestimmung.

10. Vorrichtung nach Anspruch 9, wobei die mindestens eine Steuernachricht an die Funkeinheit eine Anweisung zum Einstellen einer Markierung in einem Feld eines Headers mindestens eines des einen oder der mehreren geplanten ankommenden Datenrahmen umfasst, wobei die Markierung angibt, ob der mindestens eine des empfangenen einen oder der empfangenen mehreren geplanten ankommenden Datenrahmen zu einer oder mehreren der mindestens einen ersten Verarbeitungsvorrichtung und der mindestens einen zweiten Verarbeitungsvorrichtung zu sortieren ist, und wobei das Anweisen der NIC zum Sortieren und Weiterleiten mindestens eines des einen oder der mehreren geplanten ankommenden Datenrahmen Veranlassen von Folgendem umfasst Anweisen der NIC zum Sortieren und Weiterleiten des mindestens einen des einen oder der mehreren geplanten ankommenden Datenrahmen an eine oder mehrere der mindestens einen ersten Verarbeitungseinheit und der mindestens einen zweiten Verarbeitungseinheit basierend auf der Markierung.

11. Vorrichtung nach einem der vorhergehenden Ansprüche 9-10, wobei das Anweisen der NIC zum Sortieren des mindestens einen des einen oder der mehreren geplanten eingehenden Datenrahmen Veranlassen von Folgendem umfasst:
Konfigurieren der NIC zum Zuordnen der mindestens einen ersten Verarbeitungseinheit und der mindestens einen zweiten Verarbeitungseinheit zu einer entsprechenden Zieladresse;
wobei die mindestens eine Steuernachricht an die Funkeinheit eine Anweisung zum Einfügen eines Adressindikators, der die entsprechende Zieladresse der mindestens einen ersten Verarbeitungseinheit und der mindestens einen zweiten Verarbeitungseinheit angibt, in einen Header mindestens eines des einen oder der mehreren ankommenden Datenrahmen umfasst.

12. Vorrichtung einer Netzwerkschnittstellenkarte, NIC, einer Verarbeitungsplattform, die in Verbindung mit einem drahtlosen Kommunikationsnetzwerk arbeitet, zum Sortieren eines oder mehrerer geplanter ankommender Datenrahmen an eine oder mehrere mindestens einer ersten Verarbeitungseinheit und mindestens einer zweiten Verarbeitungseinheit der Verarbeitungsplattform, wobei die Vorrichtung eine Steuerung umfasst, die **dadurch gekennzeichnet ist, dass** sie dazu konfiguriert ist, Folgendes zu veranlassen:
Empfang einer Anweisung zum Sortieren und Weiterleiten eines oder mehrerer geplanter ankommender Datenrahmen gemäß einem bevorzugten Sortierverfahren;
Empfang, von einer Funkeinheit, die in der drahtlosen Kommunikation arbeitet, des einen oder der mehreren geplanten ankommenden Datenrahmen, die gemäß dem bevorzugten Sortierverfahren zu sortieren sind; und
Sortieren und Weiterleiten mindestens eines des empfangenen einen oder der empfangenen mehreren geplanten ankommenden Datenrahmen an eine oder mehrere der mindestens einen ersten und mindestens einen zweiten Verarbeitungseinheit basierend auf dem bevorzugten Sortierverfahren.

13. Vorrichtung nach Anspruch 12, wobei das Sortieren mindestens eines des empfangenen einen oder der empfangenen mehreren geplanten ankommenden Datenrahmen Veranlassen einer Bestimmung von mindestens einem umfasst von: Nachrichtentyp, der in mindestens einem des empfangenen einen oder der empfangenen mehreren geplanten ankommenden Datenrahmen enthalten ist; einer Bandbereich-Identifizierung, Träger-Identifizierung, Funkeinheit-Anschluss-Identifizierung und Anschluss-Identifizierung; und Veranlassen des Sortierens und Weiterleitens mindestens eines des empfangenen einen oder der empfangenen mehreren geplanten ankommenden Datenrahmen an eine oder mehrere der mindestens einen ersten Verarbeitungseinheit und der mindestens einen zweiten Verarbeitungseinheit basierend auf der Bestimmung.

14. Verarbeitungsplattform, umfassend die Vorrichtung nach den Ansprüchen 8-13.

## Revendications

1. Procédé d'une plate-forme de traitement fonctionnant en association avec un réseau de communication sans fil pour trier une ou plusieurs trames de données entrantes programmées vers une ou plusieurs parmi au moins une première unité de traitement et au moins une seconde unité de traitement comprises dans la plate-forme de traitement, dans lequel la plate-forme de traitement comprend au moins une carte d'interface réseau, NIC, le procédé étant **caractérisé en ce qu'**il comprend :
la transmission d'au moins un message de commande indiquant un procédé de tri préféré pour la ou les trames de données entrantes planifiées à une unité radio fonctionnant dans le réseau de communication sans fil ; et
le fait de demander à la carte réseau de trier et de transmettre au moins l'une des une ou plusieurs trames de données entrantes programmées selon le procédé de tri préféré à une ou à plusieurs parmi l'au moins une première unité de traitement et l'au moins une seconde unité de traitement.

2. Procédé selon la revendication 1, dans lequel le procédé de tri préféré comprend la détermination par la carte réseau d'au moins un parmi : le type de message compris dans au moins l'une des une ou plusieurs trames de données entrantes programmées reçues ; une identification de secteur de bande, une identification de porteuse, une identification de port d'unité radio et une identification de port d'au moins l'une des une ou plusieurs trames de données entrantes programmées reçues ; et dans lequel l'instruction à la carte réseau de trier et de transmettre au moins l'une des une ou plusieurs trames de données entrantes programmées comprend :
le fait de demander à la carte réseau de trier et de transmettre l'au moins une des une ou plusieurs trames de données entrantes programmées à une ou plusieurs de l'au moins une première unité de traitement et de l'au moins une seconde unité de traitement sur la base de la détermination.

3. Procédé selon la revendication 2, dans lequel l'au moins un message de commande adressé à l'unité radio comprend une instruction pour définir un marqueur dans un champ d'un en-tête d'au moins l'une des une ou plusieurs trames de données entrantes programmées, dans lequel le marqueur indique si l'au moins une des une ou plusieurs trames de données entrantes programmées reçues doit être triée vers un ou plusieurs parmi l'au moins un premier dispositif de traitement et l'au moins un second dispositif de traitement, et dans lequel le fait de demander à la carte réseau de trier et de transmettre au moins l'une des une ou plusieurs trames de données entrantes programmées comprend le fait de demander à la carte réseau de trier et de transmettre l'au moins une des une ou plusieurs trames de données entrantes programmées à l'une ou plusieurs de l'au moins une première unité de traitement et de l'au moins une seconde unité de traitement sur la base du marqueur.

4. Procédé d'une carte d'interface réseau, NIC, d'une plate-forme de traitement fonctionnant en association avec un réseau de communication sans fil pour trier une ou plusieurs trames de données entrantes programmées vers une ou plusieurs parmi au moins une première unité de traitement et au moins une seconde unité de traitement de la plateforme de traitement, le procédé étant **caractérisé en ce qu'**il comprend :
la réception d'une instruction pour trier et transmettre une ou plusieurs trames de données entrantes programmées selon un procédé de tri préféré ;
la réception, d'une unité radio fonctionnant dans le réseau communication sans fil, de la ou des trames de données entrantes programmées à trier selon le procédé de tri préféré ; et
le tri et la transmission d'au moins l'une des une ou plusieurs trames de données entrantes programmées reçues à une ou plusieurs de l'au moins une première unité de traitement et de l'au moins une seconde unité de traitement sur la base du procédé de tri préféré.

5. Procédé selon la revendication 4, dans lequel le tri d'au moins l'une des une ou plusieurs trames de données entrantes programmées reçues comprend la détermination d'au moins l'un parmi : le type de message compris dans au moins l'une des une ou plusieurs trames de données entrantes programmées reçues ; une identification de secteur de bande, une identification de porteuse, une identification de port d'unité radio et une identification de port ; et le tri et la transmission d'au moins l'une des une ou plusieurs trames de données entrantes programmées reçues à une ou plusieurs de l'au moins une première unité de traitement et de l'au moins une seconde unité de traitement sur la base de la détermination.

6. Procédé selon la revendication 5, dans lequel le tri d'au moins l'une des une ou plusieurs trames de données entrantes programmées reçues comprend la détection d'un marqueur dans un champ d'un en-tête d'au moins l'une des une ou plusieurs trames de données entrantes programmées reçues, dans lequel le marqueur indique si l'au moins une de la pluralité de trames de données programmées entrantes reçues doit être triée vers un ou plusieurs de l'au moins un premier dispositif de traitement et de l'au moins un second dispositif de traitement, et le tri et la transmission de l'au moins une de la pluralité de trames de données entrantes programmées reçues en fonction du marqueur détecté.

7. Programme informatique comprenant un support non transitoire lisible par ordinateur dans lequel le support non transitoire lisible par ordinateur stocke un programme informatique comprenant des instructions de programme, dans lequel le programme informatique est configuré pour être chargeable dans une unité de traitement de données, comprenant un processeur et une mémoire associée à ou faisant partie intégrante de l'unité de traitement de données, dans lequel, lorsqu'il est chargé dans l'unité de traitement de données, le programme informatique est configuré pour être stocké dans la mémoire, dans lequel le programme informatique, lorsqu'il est chargé dans et exécuté par le processeur, est configuré pour amener le processeur à exécuter des étapes de procédé selon l'un quelconque des procédés décrits en conjonction avec les revendications 1 à 6.

8. Appareil d'une plate-forme de traitement fonctionnant en association avec un réseau de communication sans fil pour trier une ou plusieurs trames de données entrantes programmées vers une ou plusieurs parmi au moins une première unité de traitement et au moins une seconde unité de traitement comprises dans la plate-forme de traitement, dans lequel la plate-forme de traitement comprend au moins une carte d'interface réseau, NIC, et une unité de commande **caractérisée en ce qu'**elle est configurée pour provoquer :
la transmission d'au moins un message de commande indiquant un procédé de tri préféré pour la ou les trames de données entrantes programmées à une unité radio fonctionnant dans le réseau de communication sans fil ; et
le fait de demander à la carte réseau de trier et de transmettre au moins l'une des une ou plusieurs trames de données entrantes programmées selon le procédé de tri préféré à une ou plusieurs parmi l'au moins une première unité de traitement et l'au moins une seconde unité de traitement.

9. Appareil selon la revendication 8, dans lequel le procédé de tri préféré comprend la détermination par la carte réseau d'au moins l'un parmi : le type de message compris dans au moins l'une des une ou plusieurs trames de données entrantes programmées reçues ; une identification de secteur de bande, une identification de porteuse, une identification de port d'unité radio et une identification de port d'au moins l'une des une ou plusieurs trames de données entrantes programmées reçues ; et dans lequel le fait de demander à la carte réseau de trier et de transmettre au moins l'une des une ou plusieurs trames de données entrantes programmées comprend le fait de provoquer :
le fait de demander à la carte réseau de trier et de transmettre l'au moins une des une ou plusieurs trames de données entrantes programmées à une ou plusieurs de l'au moins une première unité de traitement et de l'au moins une seconde unité de traitement sur la base de la détermination.

10. Appareil selon la revendication 9, dans lequel l'au moins un message de commande adressé à l'unité radio comprend une instruction pour définir un marqueur dans un champ d'un en-tête d'au moins l'une des une ou plusieurs trames de données entrantes programmées, dans lequel le marqueur indique si l'au moins une des une ou plusieurs trames de données entrantes programmées reçues doit être triée vers un ou plusieurs de l'au moins un premier dispositif de traitement et de l'au moins un second dispositif de traitement, et dans lequel le fait de demander à la carte réseau de trier et de transmettre au moins l'une des une ou plusieurs trames de données entrantes programmées comprend le fait de demander à la carte réseau de trier et de transmettre l'au moins une des une ou plusieurs trames de données entrantes programmées à une ou plusieurs de l'au moins une première unité de traitement et de l'au moins une seconde unité de traitement sur la base du marqueur.

11. Appareil selon l'une quelconque des revendications précédentes 9 et 10, dans lequel le fait de demander à la carte réseau de trier l'au moins une des une ou plusieurs trames de données entrantes programmées comprend le fait de provoquer :
la configuration de la carte réseau pour associer l'au moins une première unité de traitement et l'au moins une seconde unité de traitement à des adresses de destination respectives ;
dans lequel l'au moins un message de commande adressé à l'unité radio comprend une instruction pour insérer un indicateur d'adresse indicatif de l'adresse de destination respective de l'au moins une première unité de traitement et de l'au moins une seconde unité de traitement dans un en-tête d'au moins l'une des une ou plusieurs trames de données entrantes.

12. Appareil d'une carte d'interface réseau, NIC, d'une plate-forme de traitement fonctionnant en association avec un réseau de communication sans fil pour trier une ou plusieurs trames de données entrantes programmées vers une ou plusieurs parmi au moins une première unité de traitement et au moins une seconde unité de traitement de la plate-forme de traitement, l'appareil comprenant une unité de commande **caractérisée en ce qu'**elle est configurée pour provoquer :
la réception d'une instruction pour trier et transmettre une ou plusieurs trames de données entrantes programmées selon un procédé de tri préféré ;
la réception, à partir d'une unité radio fonctionnant dans le réseau de communication sans fil, de la ou des trames de données entrantes programmées à trier selon le procédé de tri préféré ; et
le tri et la transmission d'au moins l'une des une ou plusieurs trames de données entrantes programmées reçues vers une ou plusieurs de l'au moins une première et de l'au moins une seconde unité de traitement sur la base du procédé de tri préféré.

13. Appareil selon la revendication 12, dans lequel le tri d'au moins l'une des une ou plusieurs trames de données entrantes programmées reçues comprend le fait de provoquer la détermination d'au moins l'un parmi : le type de message compris dans au moins l'une des une ou plusieurs trames de données entrantes programmées reçues ; une identification de secteur de bande, une identification de porteuse, une identification de port d'unité radio et une identification de port ; et le fait de provoquer le tri et la transmission d'au moins l'une des une ou plusieurs trames de données entrantes programmées reçues vers une ou plusieurs de l'au moins une première unité de traitement et de l'au moins une seconde unité de traitement sur la base de la détermination.

14. Plate-forme de traitement comprenant l'appareil selon les revendications 8 à 13.
